# EUROPÄISCHE PATENTSCHRIFT

(11) **EP 3 325 307 B1**
(45) Veröffentlichungstag und Bekanntmachung des Hinweises auf die Patenterteilung: **02.11.2022**
(21) Anmeldenummer: 17764326.9
(22) Anmeldetag: 21.07.2017
(51) Int. Cl.: B60L 3/00, H02P 5/68, H02P 5/74, B60K 6/20, B60K 6/26, H02J 7/14

(54) **ELEKTRISCHER TRAKTIONSANTRIEB FÜR EIN FAHRZEUG**
ELECTRICAL TRACTION DRIVE FOR A VEHICLE
ENTRAÎNEMENT PAR TRACTION ÉLECTRIQUE POUR UN VÉHICULE

(30) Priorität: 02.08.2016 DE 102016214275
(43) Veröffentlichungstag der Anmeldung: 30.05.2018
(73) Patentinhaber: Ziehl-Abegg Automotive GmbH & Co. KG, 74635 Kupferzell (DE)
(72) Erfinder: HAAG, Alexander, 74653 Ingelfingen (DE); KLETT, Sascha, 71570 Oppenweiler (DE); ARNOLD, Ralf, 74653 Künzelsau (DE)
(74) Vertreter: Ullrich & Naumann PartG mbB
(86) Internationale Anmeldenummer: PCT/DE2017/200070
(87) Internationale Veröffentlichungsnummer: WO 2018/024296

(56) Entgegenhaltungen:
- WO-A1-2014/048462
- WO-A1-2014/048462
- DE-A1-102005 004 330
- DE-A1-102005 004 330
- DE-C1- 19 910 091
- DE-C1- 19 910 091

## Beschreibung

Die vorliegende Erfindung betrifft einen elektrischen Traktionsantrieb für ein Fahrzeug, mit mindestens zwei unabhängig voneinander ansteuerbaren Einzelradantrieben.

Der Begriff "Fahrzeug" ist im weitesten Sinne zu verstehen, wobei es hier ganz überwiegend um Personenfahrzeuge, inklusive Omnibusse sowie um Nutzfahrzeuge, inklusive Sonderfahrzeuge geht.

Tritt in hybrid- oder batterieelektrischen Fahrzeugen ein Schaden im Antriebssystem auf, insbesondere an einem Verbrennungsmotor, einem Elektromotor, dem Getriebe, dem Differenzial, einem Umrichter oder an der Hochvoltbatterie, lässt sich das Fahrzeug nicht mehr von der Stelle bewegen und wird als so genannter "Liegenbleiber" bezeichnet. Solche "Liegenbleiber" stellen ein Hindernis und eine Gefahr im Straßenverkehr dar. Das erforderliche Abschleppen bedingt zudem erhebliche Kosten.

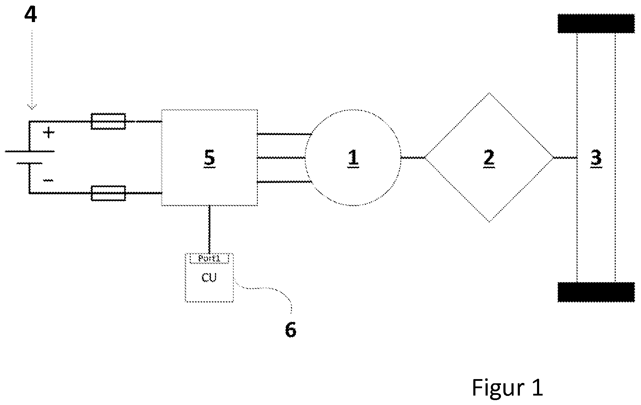

Hybridfahrzeuge umfassen üblicherweise zum Verbrennungsmotor einen elektrischen Zentralmotor sowie ein Getriebe und ein Differenzial. Zum diesbezüglichen Stand der Technik sei auf Figur 1 verwiesen. Der Zentralmotor wird über eine Hochvoltbatterie und einen Umrichter mit elektrischer Energie versorgt. Ein Steuergerät dient zur Ansteuerung des Zentralmotors.

Aus der Praxis sind auch bereits elektrische Einzelradantriebe mit Getriebeübersetzung und getriebelose Einzelradantriebe als Direktantrieb bekannt, nämlich sogenannte Radnabenmotoren. Sie finden sowohl im Bereich der Personenkraftwagen als auch im Bereich der Nutzfahrzeuge und Omnibusse sowie bei Sonderfahrzeugen ihren Einsatz.

Ungeachtet der konkreten Ausführung ist bei einem Schaden im Antriebssystem eine Weiterfahrt aus fahrzeugeigenem Antrieb nicht mehr möglich, beispielsweise aufgrund einer Blockade rotierender Teile im Antriebsstrang. Das liegengebliebene Fahrzeug muss daher abgeschleppt oder vor Ort instandgesetzt werden. Insbesondere an Gefahrenstellen wie unübersichtlichen Kurven, an Baustellen, auf mehrspurigen Kraftfahrstraßen/Schnellstraßen/Autobahnen, an Bahnübergängen, etc. bedeutet dies eine Gefahr für Fahrer, Insassen und Dritte.

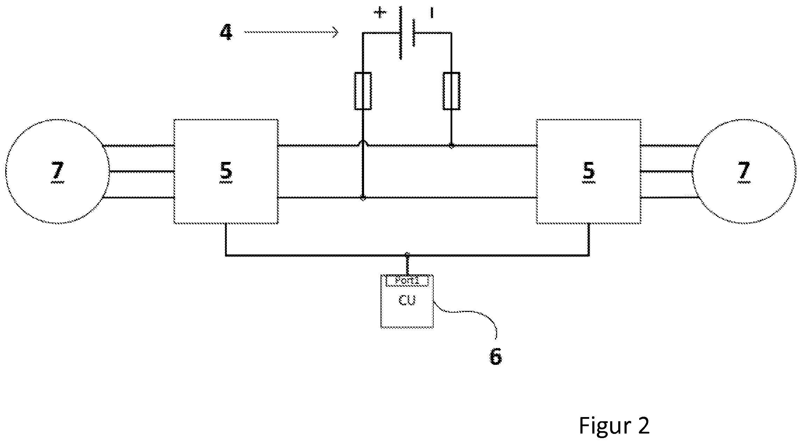

Aus dem aus der Praxis bekannten Stand der Technik ist die einfache Vernetzung sogenannter Radnabenantriebe bekannt. Sie sind in den Antriebsstrang integriert und es erfolgt eine zentrale Absicherung der Einzelradantriebe sowie eine Ansteuerung über eine einzige Schnittstelle am Steuergerät des Antriebs (vgl. Figur 2). Ein zuverlässiger Notlaufbetrieb ist damit nicht möglich, da beispielsweise ein Fehler in der Stromversorgung beide Antriebe deaktivieren kann. Ein Fehler in der Datenbus-Leitung würde ebenfalls zu einem Funktionsverlust beider Antriebe führen. Ein echter Notlaufbetrieb ist gemäß Stand der Technik daher nicht möglich.

Des Weiteren ist aus der DE 199 10 091 C1 ein Elektroantrieb mit einem Elektromotor und einer Motorelektronik bekannt, wobei der Strom für den Elektromotor von einer Stromquelle erzeugt wird, wobei mindestens zwei voneinander unabhängige Stromquellen vorgesehen sind. Jeder Stromquelle ist eine Elektromotorwicklung zugeordnet, wobei zum Beispiel ein Elektromotor zwei parallele Wicklungen aufweist.

Das Dokument WO 2014/048462 A1 offenbart eine Antriebsanordnung für ein Kraftfahrzeug und ein entsprechendes Kraftfahrzeug. Die Druckschrift DE 10 2005 004 330 A1 betrifft ein Bordnetz für sicherheitsrelevante Verbraucher.

Der vorliegenden Erfindung liegt nun die Aufgabe zugrunde, einen elektrischen Traktionsantrieb für ein Fahrzeug mit einzeln angetriebenen Rädern zu schaffen, der mit einfachen Mitteln, ohne besonderen konstruktiven Aufwand, einen Notlaufbetrieb ermöglicht, um ein Liegenbleiben des Fahrzeugs zu vermeiden. Die Notlauffunktion soll es zumindest ermöglichen, das Fahrzeug eigenständig aus dem Gefahrenbereich zu fahren. Im Idealfall soll es möglich sein, das Fahrzeug eigenständig zur nächsten Service-Werkstatt zu fahren.

Voranstehende Aufgabe ist durch die Merkmale des Anspruchs 1 gelöst. Danach ist ein elektrischer Traktionsantrieb für ein Fahrzeug, mit mindestens zwei unabhängig voneinander ansteuerbaren Einzelradantrieben, gekennzeichnet durch zwei einzeln angetriebene Räder auf einer Achse und eine gemeinsame Energiequelle für die zwei einzeln angetriebenen Räder auf der Achse, wobei zur Realisierung einer Notlauffunktion die Antriebe redundant funktionsfähig sind, wobei die beiden Einzelradantriebe jeweils eine eigene steuerungs- und/oder leistungstechnische Vernetzung im Sinne eines Subsystems haben und wobei jedes Subsystem eine separate Datenbusschnittstelle an einem zentralen Achsantriebs-Steuergerät (6) zur Ansteuerung der Einzelradantriebe umfasst.

Bei einem elektrischen Traktionsantrieb für ein Fahrzeug, welches mindestens zwei unabhängig voneinander ansteuerbare Einzelradantriebe auf einer Achse hat, ist die Notlauffunktion dadurch realisiert, dass die Antriebe redundant funktionsfähig sind. Dies bedeutet, dass zumindest dann, wenn nicht gleichzeitig beide Einzelradantriebe defekt sind, einer der Antriebe im Notlauf arbeiten kann.

Zur Realisierung der Notlauffunktion umfassen die beiden Einzelradantriebe jeweils eine eigene steuerungs- und/oder leistungstechnische Vernetzung im Sinne eines Subsystems. Dazu umfasst die Vernetzung bzw. jedes Subsystem eine separate Datenbus-Schnittstelle an einem zentralen Achsantriebs-Steuergerät, nämlich zur unmittelbaren oder mittelbaren Ansteuerung der jeweiligen Einzelradantriebe. Insoweit ist die Abhängigkeit von einer einzigen Datenbusleitung eliminiert.

Des Weiteren kann die Vernetzung bzw. das Subsystem eine Not-Energiequelle umfassen, die die erforderliche Energie für das Leistungsteil eines jeweiligen Umrichters bereitstellt.

Bei der Not-Energiequelle kann es sich um einen Energie-Erzeuger handeln bzw. kann der Energie-Erzeuger Bestandteil der Not-Energiequelle sein. Dabei kann es sich um einen Generator, um Solarzellen, etc. handeln.

Bei der Not-Energiequelle kann es sich bevorzugt um einen Akkumulator bzw. eine Batterie handeln, die in kleinerer Bauart und geringerer Leistung bereitgestellt wird. Die Not-Energiequelle dient zur Spannungs- bzw. Stromversorgung der Einzelradantriebe im Notlaufbetrieb, wobei diese in ihrer Leistung reduziert ist, zumal die Not-Energiequelle ausschließlich zur Gewährleistung der Notlauffunktion dient.

Auch ist es denkbar, dass die Not-Energiequelle eine asymmetrische Traktion oder den Antrieb eines einzigen Antriebsrads bewirkt, um das Fahrzeug eigenständig aus dem Gefahrenbereich zu bewegen oder es mit reduzierter Geschwindigkeit zur nächsten Service-Werkstatt zu fahren.

Grundsätzlich ist es denkbar, dass die Notlauffunktion, d.h. der Notlaufbetrieb, bei Detektion vorgebbarer Parameter automatisch aktivierbar ist. Die Detektion kann beispielsweise aus einem Steuergerät oder einem Batteriemanagementsystem heraus erfolgen.

Ebenso und im Rahmen einer besonders einfachen Ausgestaltung ist es denkbar, dass die Notlauffunktion, d.h. der Notlaufbetrieb manuell, per Schalter, Taster, etc. vom Fahrer des Fahrzeugs aktivierbar ist, nämlich dann, wenn der Schaden/Defekt eingetreten ist. Mit Aktivierung der Notlauffunktion wird dann beispielsweise die Not-Energiequelle und/oder werden die besonderen Steuermechanismen des die Notlauffunktion bewirkenden Subsystems aktiviert. Mit oder nach Aktivierung der Notlauffunktion ist die Fahrtrichtung wählbar, so dass das Fahrzeug hinreichend gut manövrierbar ist. Dabei kann das Gaspedal zur üblichen Betätigung dienen oder auf eine geeignete Schalt- oder Regelvorrichtung (Hebel, etc.) wirken.

Ein die Notlauffunktion aktivierendes Niedervolt-Signal kann über eine Steuerungsleitung direkt oder über das Achsantriebs-Steuergerät an den Umrichter und mindestens einen der Einzelantriebe geführt werden. Dabei ist wesentlich, dass derselbe Umrichter aktiv mit Energie versorgt wird, ggf. von der Not-Energiequelle her.

Der eigentliche Fahrbetrieb wird über einen Stellstrom im Umrichter realisiert, wobei der Betrag des Stellstroms in einer dem Umrichter zugeordneten Software hinterlegt sein kann. Auf diese Software greift auch das Subsystem der Notlauffunktion zu, um eine hinreichende Energieversorgung im Notlaufbetrieb zu gewährleisten.

Die Notlauffunktion ist ganz überwiegend oder vollständig über Software implementiert. Entsprechend kann diese in bestehende Antriebe nachgerüstet werden. Insbesondere die Algorithmik der Notlauffunktion ist insgesamt oder zumindest teilweise als Software im Umrichter-Steuergerät, in einem originären oder einem redundanten sekundären Hardware-Bereich, hinterlegt.

Ebenso ist es denkbar, dass die Notlauffunktion, insbesondere die Algorithmen der Notlauffunktion, insgesamt oder zumindest teilweise als Software im Batterie-Management-System hinterlegt ist.

Wie bereits zuvor ausgeführt, kann über die Software der Notlauffunktion eine weiterreichende Beschädigung des Antriebssystems vermieden werden, nämlich dadurch, dass sie eine Leistungslimitierung im Notlaufbetrieb herbeiführt, ggf. unter Berücksichtigung des jeweils detektierten bzw. ermittelten Defekts.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in schematischer Darstellung einen elektrischen Zentralmotor umfassenden Antrieb bei einfacher Vernetzung (Stand der Technik),
- Fig. 2: in schematischer Darstellung einen Radnabenantriebe umfassenden Antrieb mit einfacher Vernetzung (Stand der Technik),
- Fig. 3: in schematischer Darstellung ein erstes Ausführungsbeispiel eines erfindungsgemäßen Antriebs mit zwei Radnabenantrieben auf einer Achse und einfacher Vernetzung, unter Realisierung eines Notlaufbetriebs,
- Fig. 4: in schematischer Darstellung ein zweites Ausführungsbeispiel eines erfindungsgemäßen Antriebs mit zwei Radnabenantrieben auf einer Achse und einfacher Vernetzung, unter Realisierung eines Notlaufbetriebs und
- Fig. 5: in schematischer Darstellung ein drittes Ausführungsbeispiel eines erfindungsgemäßen Antriebs mit zwei Radnabenantrieben auf einer Achse und zusätzlicher Vernetzung, unter Realisierung eines Notlaufbetriebs.

Fig. 1 zeigt in einer schematischen Ansicht einen den Stand der Technik betreffenden Antrieb beispielsweise eines Hybrid-Fahrzeugs, bezogen auf den elektrischen Teil des Antriebs. Es ist als Elektromotor ein Zentralmotor 1 vorgesehen, der über ein Differenzial 2 auf eine Achse 3 wirkt.

Der Zentralmotor 1 wird über eine Energiequelle 4 (üblicherweise HV-Batterie) mit Energie versorgt, die über einen Umrichter 5, angesteuert über ein Antriebs-Steuergerät 6, den Zentralmotor 1 mit elektrischer Energie versorgt.

Fig. 2 zeigt eine aus der Praxis ebenfalls bereits bekannte Variante, nämlich die Vorkehrung zweier Radnabenantriebe 7 bei einfacher Vernetzung. Auch hier werden die beiden Antriebe über eine Energiequelle 4 mit Hochvolt-Gleichspannung versorgt. Das Antriebs-Steuergerät 6 steuert die beiden Antriebe 7 jeweils über einen dem jeweiligen Antrieb 7 zugeordneten Umrichter 5, wobei der den Umrichter 5 enthaltene Funktionsblock weitere funktionale Elemente umfassen kann.

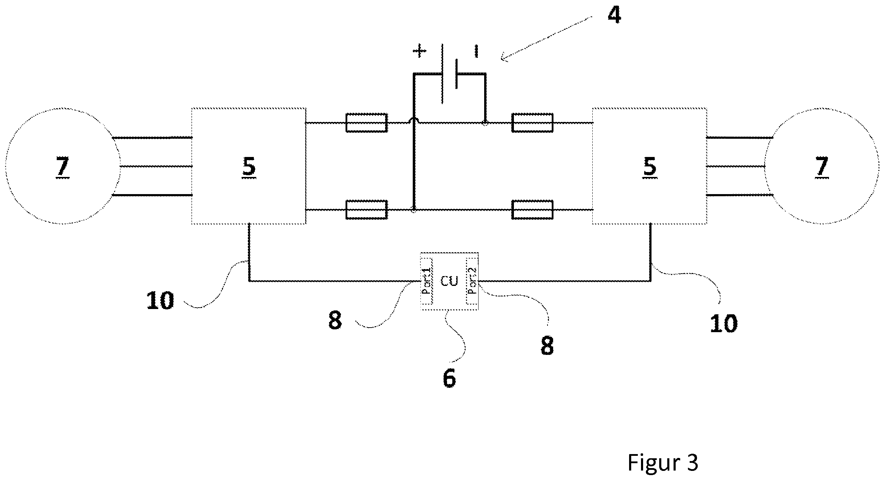

Fig. 3 zeigt ein Ausführungsbeispiel eines erfindungsgemäßen Antriebs mit Realisierung eines Notlaufbetriebs, wobei dort eine Vernetzung vorgesehen ist. Beide Radnabenantriebe 7 haben als jeweiliges Subsystem eine eigene Vernetzung. Dies bedeutet im Detail eine getrennte Absicherung der Energiequelle 4 bzw. der Hochvolt-Gleichspannungsversorgung. Des Weiteren sind für die Ansteuerung zwei getrennte Datenbus-Schnittstellen 8 am zentralen Antriebs-Steuergerät 6 (CU) vorgesehen.

Optional kann eine zur Energiequelle 4 (Hochvoltbatterie) alternative Energiequelle zur Versorgung der Antriebe eingesetzt werden.

Im Rahmen der Fig. 3 entnehmbaren Ausgestaltung muss sichergestellt sein, dass eine Steuerungsleitung 10 im Niedervoltbereich von einem dort nicht gezeigten Notlaufschalter an den Umrichter 5 von mindestens einem Radnabenantrieb 7 und eine Energieversorgung 4 an demselben Umrichter 5 aktiv vorliegt. Die Steuerungsleitung 10 kann über das Antriebs-Steuergerät 6 direkt an den Umrichter 5 angebunden sein. Alternativ ist eine Anbindung über CAN-Bus des Notlaufschalters an den Umrichter möglich.

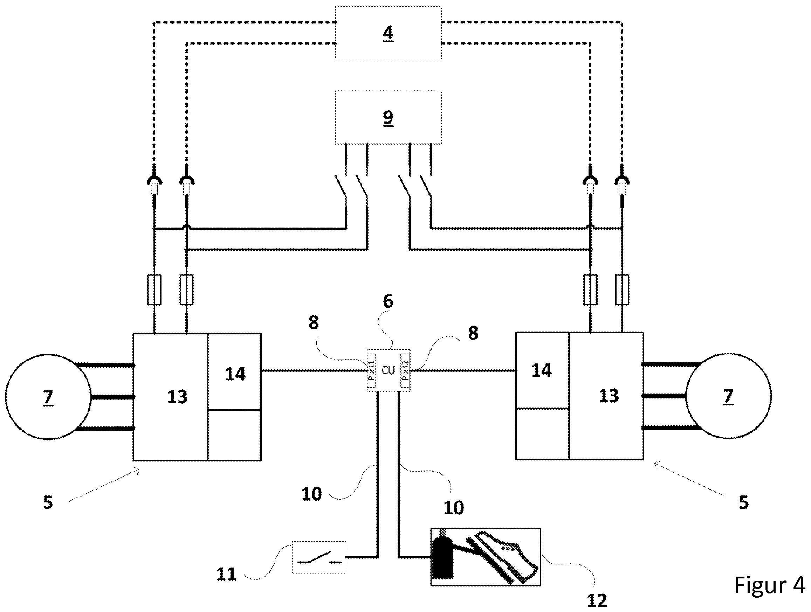

Fig.4 zeigt ein weiteres Ausführungsbeispiel des erfindungsgemäßen Antriebs, wobei dort neben der eigentlichen Energiequelle 4 eine Not-Energiequelle 9 vorgesehen ist. Bei der Not-Energiequelle kann es sich wie bei der eigentlichen Energiequelle 4 um eine Hochvoltbatterie handeln, wobei sowohl der eigentlichen Energiequelle 4 als auch der Not-Energiequelle 9 ein Batteriemanagementsystem (BMS) zugeordnet sein kann. Das BMS kann Teilbereich oder Untereinheit der gesamten Anordnung der Energieversorgung sein. Mittels eines vorzugsweise integrierten Software-Analysesystems kann die Anordnung der Energiequelle 4 und der Not-Energiequelle 9 auf vollständige oder bedingte Funktionsfähigkeit geprüft werden.

Gemäß der Anordnung in Fig. 4 ist sichergestellt, dass eine Steuerungsleitung 10 im Niedervoltbereich von einem Notlaufschalter 11 an den Umrichter 5 zu mindestens einem der Antriebe 7 führt. Im Konkreten führt die Steuerungsleitung 10 von dem Notlaufschalter 11 über das Achsantriebs-Steuergerät 6 zu dem Umrichter 5. Gleichzeitig muss sichergestellt sein, dass an dem gleichen Umrichter 5 aktiv die Energieversorgung vorliegt, entweder über die eigentliche Energiequelle 4 oder über die Not-Energiequelle 9. Wesentlich ist, dass die Steuerungsleitung 10 über das Antriebs-Steuergerät 6 oder direkt an den Umrichter 5 angebunden sein kann. Die Betätigung kann dann im Notlaufbetrieb über das Gaspedal 12 und den Richtungsschalter 11 erfolgen.

Fällt die Versorgungsspannung der Energiequelle 4 aus, wird über zusätzliche Anschlusspunkte eine Notspannung von der Not-Energiequelle 9 her angeschlossen bzw. aktiviert, die die erforderliche Energie für das Leistungsteil 13 des Umrichters 5 bereitstellt.

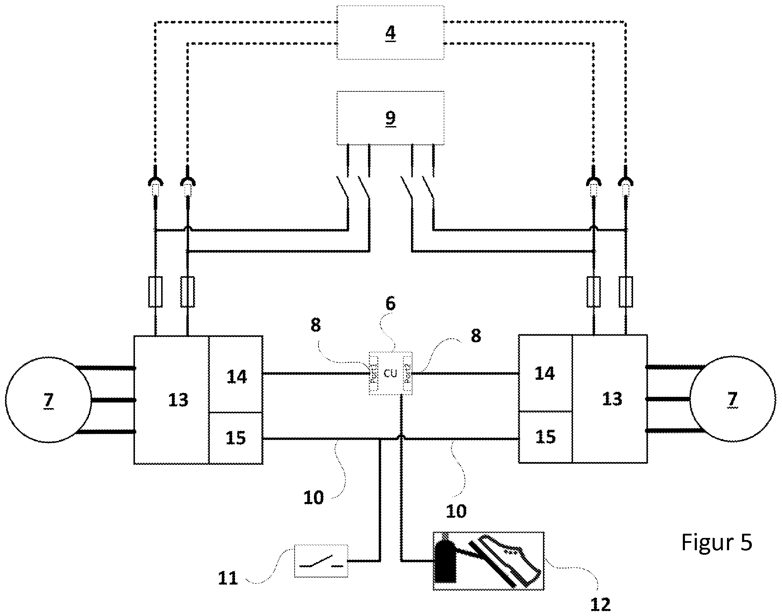

Fig. 5 zeigt ein weiteres Ausführungsbeispiel eines erfindungsgemäßen Antriebs. Es umfasst die Funktionseinheit des Umrichters 5. Neben dem Signalteil 14 ist ein zusätzlicher Bereich 15 vorgesehen, so dass der Notlaufbetrieb über eine getrennte Schnittstelle betrieben werden kann. Die Vorgabe des Stellstroms erfolgt wiederum über die Steuerungsleitung 10, wobei das Signal über einen Wahlschalter 11 oder einen Analogwertgeber ausgelöst wird. Das Gaspedal 12 kann im Notlaufbetrieb herkömmlich betätigt werden.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Er-örterung der beanspruchten Lehre dienen, diese jedoch nicht auf die Ausführungsbeispiele einschränken.

### Bezugszeichenliste

- 1: Zentralmotor, Elektromotor
- 2: Differenzial
- 3: Achse
- 4: Energiequelle
- 5: Umrichter, Umrichtereinheit
- 6: Antriebs-Steuergerät
- 7: Radnabenantrieb, Einzelantrieb
- 8: Datenbus-Schnittstelle
- 9: Not-Energiequelle
- 10: Steuerungsleitung
- 11: Notlaufschalter, Wahlschalter, Richtungsschalter
- 12: Gaspedal
- 13: Leistungsteil des Umrichters
- 14: Signalteil des Umrichters
- 15: zusätzlicher Signalteil für Notlaufsteuerung

## Patentansprüche

1. Elektrischer Traktionsantrieb für ein Fahrzeug, mit mindestens zwei unabhängig voneinander ansteuerbaren Einzelradantrieben (7),
**gekennzeichnet durch** zwei einzeln angetriebene Räder auf einer Achse (3) und eine gemeinsame Energiequelle (4) für die zwei einzeln angetriebenen Räder auf der Achse (3), wobei zur Realisierung einer Notlauffunktion die Antriebe redundant funktionsfähig sind, wobei die beiden Einzelradantriebe (7) jeweils eine eigene steuerungs- und/oder leistungstechnische Vernetzung im Sinne eines Subsystems haben und wobei jedes Subsystem eine separate Datenbusschnittstelle (8) an einem zentralen Achsantriebs-Steuergerät (6) zur Ansteuerung der Einzelradantriebe (7) umfasst.

2. Antrieb nach Anspruch 1, **dadurch gekennzeichnet, dass** die Vernetzung bzw. das Subsystem eine Not-Energiequelle (9) umfasst, die die erforderliche Energie für das Leistungsteil (13) eines jeweiligen Umrichters (5) bereitstellt, wobei die Not-Energiequelle (9) ein Energie-Erzeuger oder ein Akkumulator bzw. eine Batterie oder ein Netzgerät oder Spannungswandler sein kann.

3. Antrieb nach Anspruch 2, **dadurch gekennzeichnet, dass** die Not-Energiequelle (9) zu einer reduzierten Spannungs- oder Stromansteuerung der Einzelradantriebe (7) dient.

4. Antrieb nach Anspruch 2 oder 3, **dadurch gekennzeichnet, dass** mit der Not-Energiequelle (9) eine symmetrische, asymmetrische Traktion oder der Antrieb eines einzigen Antriebsrades bewirkt wird.

5. Antrieb nach einem der Ansprüche 1 bis 4, **dadurch gekennzeichnet, dass** die Notlauffunktion, d.h. der Notlaufbetrieb, bei Detektion vorgebbarer Parameter automatisch aktivierbar ist.

6. Antrieb nach einem der Ansprüche 1 bis 4, **dadurch gekennzeichnet, dass** die Notlauffunktion, d.h. der Notlaufbetrieb, per Schalter, Taster, Fußpedal, etc. aktivierbar ist.

7. Antrieb nach Anspruch 5 oder 6, **dadurch gekennzeichnet, dass** mit oder nach Aktivierung der Notlauffunktion die Fahrtrichtung wählbar ist.

8. Antrieb nach einem der Ansprüche 1 bis 7, **dadurch gekennzeichnet, dass** ein die Notlauffunktion aktivierendes Niedervolt-Signal über eine Steuerungsleitung (10) direkt oder über das Achsantriebs-Steuergerät (6) an den Umrichter (5) mindestens eines der Einzelradantriebe (7) geführt wird, wobei derselbe Umrichter (5) aktiv mit Energie versorgt wird.

9. Antrieb nach Anspruch 8, **dadurch gekennzeichnet, dass** der eigentliche Fahrbetrieb über einen Stellstrom im Umrichter (5) realisiert wird, wobei der Betrag des Stellstroms in einer dem Umrichter (5) zugeordneten Software hinterlegt ist.

10. Antrieb nach einem der Ansprüche 1 bis 9, **dadurch gekennzeichnet, dass** die Notlauffunktion ganz überwiegend oder vollständig über Software implementierbar und entsprechend in bestehende Antriebe nachrüstbar ist.

11. Antrieb nach einem der Ansprüche 1 bis 10, **dadurch gekennzeichnet, dass** die Notlauffunktion, insbesondere die Algorithmen der Notlauffunktion, insgesamt oder zumindest teilweise als Software im Motor-Steuergerät, in einem originären oder in einem redundanten sekundären Hardware-Bereich, hinterlegt ist.

12. Antrieb nach einem der Ansprüche 1 bis 11, **dadurch gekennzeichnet, dass** die Notlauffunktion, insbesondere die Algorithmen der Notlauffunktion, insgesamt oder zumindest teilweise als Software im Umrichter (5) oder alternativ Motorsteuergerät hinterlegt ist.

13. Antrieb nach einem der Ansprüche 9 bis 12, **dadurch gekennzeichnet, dass** in der Software der Notlauffunktion eine Leistungslimitierung zur Vermeidung einer weiteren Beschädigung des Antriebssystems hinterlegt ist.

## Claims

1. Electrical traction drive for a vehicle, having at least two individual wheel drives (7) which can be controlled independently of each other,
**characterised by** two individually driven wheels on an axle (3) and a common energy source (4) for the two individually driven wheels on the axle (3), wherein in order to produce an emergency operation function the drives can be operated redundantly, wherein the two individual wheel drives (7) each have an individual control and/or power networking in the manner of a subsystem and wherein each subsystem comprises a separate data bus interface (8) on a central axle drive control device (6) for controlling the individual wheel drives (7).

2. Drive according to claim 1, **characterised in that** the networking or the subsystem comprises an emergency energy source (9) which provides the required energy for the power component (13) of a respective inverter (5), wherein the emergency energy source (9) may be an energy generator or an accumulator or a battery or a network device or voltage transformer.

3. Drive according to claim 2, **characterised in that** the emergency energy source (9) is used for a reduced voltage or current control of the individual wheel drives (7).

4. Drive according to claim 2 or 3, **characterised in that** using the emergency energy source (9) a symmetrical traction, asymmetrical traction or the driving of an individual drive wheel is brought about.

5. Drive according to any one of claims 1 to 4, **characterised in that** the emergency operation function, that is to say, the emergency operation mode, can be activated automatically when predetermined parameters are detected.

6. Drive according to any one of claims 1 to 4, **characterised in that** the emergency operation function, that is to say, the emergency operation mode, can be activated by means of a switch, button, foot pedal, etcetera.

7. Drive according to claim 5 or 6, **characterised in that**, with or after activation of the emergency operation mode, the travel direction can be selected.

8. Drive according to any one of claims 1 to 7, **characterised in that** a low voltage signal which activates the emergency operation function is guided by means of a control line (10) directly or via the axle drive control device (6) to the inverter (5) of at least one of the individual wheel drives (7), wherein the same inverter (5) is actively supplied with energy.

9. Drive according to claim 8, **characterised in that** the actual driving mode is produced by means of a control current in the inverter (5), wherein the value of the control current is stored in software which is associated with the inverter (5) .

10. Drive according to any one of claims 1 to 9, **characterised in that** the emergency operation function can be implemented quite predominantly or completely by means of software and can accordingly be retrofitted in existing drives.

11. Drive according to any one of claims 1 to 10, **characterised in that** the emergency operation function, in particular the algorithms of the emergency operation function, is stored as a whole or at least partially as software in the motor control device, in an original or in a redundant secondary hardware region.

12. Drive according to any one of claims 1 to 11, **characterised in that** the emergency operation function, in particular the algorithms of the emergency operation function, is stored as a whole or at least partially as software in the inverter (5) or, alternatively, motor control device.

13. Drive according to any one of claims 9 to 12, **characterised in that** in the software of the emergency operation function a power limitation is stored in order to prevent further damage to the drive system.

## Revendications

1. Entraînement de traction électrique pour un véhicule, avec au moins deux entraînements de roues individuels (7) contrôlables indépendamment l'un de l'autre,
**caractérisé par** deux roues entraînées individuellement sur un essieu (3) et une source d'énergie commune (4) pour les deux roues entraînées individuellement sur l'essieu (3), dans lequel, pour la réalisation d'une fonction de marche de secours, les entraînements peuvent fonctionner de manière redondante, dans lequel les deux entraînements de roues individuels (7) comprennent chacun son propre réseau de commande et/ou de puissance sous la forme d'un sous-système et dans lequel chaque sous-système comprend une interface de bus de données (8) au niveau d'un appareil de commande d'entraînement d'essieu (6) pour le contrôle des entraînements de roues individuels (7).

2. Entraînement selon la revendication 1, **caractérisé en ce que** le réseau ou le système comprend une source d'énergie de secours (9) qui met à disposition l'énergie nécessaire pour la partie de puissance (13) d'un convertisseur (5) correspondant, dans lequel la source d'énergie de secours (9) peut être un générateur d'énergie ou un accumulateur ou une batterie ou un bloc d'alimentation ou un convertisseur de tension.

3. Entraînement selon la revendication 2, **caractérisé en ce que** la source d'énergie de secours (9) permet un contrôle réduit de la tension ou du courant des entraînements de roues individuels (7).

4. Entraînement selon la revendication 2 ou 3, **caractérisé en ce que** la source d'énergie de secours (9) permet une traction symétrique, asymétrique ou l'entraînement d'une seule roue d'entraînement.

5. Entraînement selon l'une des revendications 1 à 4, **caractérisé en ce que** la fonction de marche de secours, c'est-à-dire le mode de marche de secours, peut être activée automatiquement lors de la détection de paramètres prédéterminés.

6. Entraînement selon l'une des revendications 1 à 4, **caractérisé en ce que** la fonction de marche de secours, c'est-à-dire le mode de marche de secours, peut être activée à l'aide d'un interrupteur, d'un bouton, d'une pédale, etc.

7. Entraînement selon la revendication 5 ou 6, **caractérisé en ce que**, lors de l'activation ou après l'activation de la fonction de marche de secours, la direction du déplacement peut être sélectionnée.

8. Entraînement selon l'une des revendications 1 à 7, **caractérisé en ce qu'**un signal à basse tension activant la fonction de marche de secours est guidé directement par l'intermédiaire d'une ligne de commande (10) ou par l'intermédiaire de l'appareil de commande d'entraînement d'essieu (6), vers le convertisseur (5) d'au moins un des entraînements de roues individuels (7), dans lequel le même convertisseur (5) est alimenté activement en énergie.

9. Entraînement selon la revendication 8, **caractérisé en ce que** le mode de marche de secours proprement dit est réalisé par l'intermédiaire d'un courant de réglage dans le convertisseur (5), dans lequel la valeur absolue du courant de réglage est enregistrée dans un logiciel correspondant au convertisseur (5).

10. Entraînement selon l'une des revendications 1 à 9, **caractérisé en ce que** la fonction de marche de secours peut être implémentée principalement ou entièrement par l'intermédiaire du logiciel et peut être rajoutée ultérieurement dans des entraînements existants.

11. Entraînement selon l'une des revendications 1 à 10, **caractérisé en ce que** la fonction de marche de secours, plus particulièrement les algorithmes de la fonction de marche d'urgence, est enregistrée intégralement ou au moins partiellement en tant que logiciel dans l'appareil de commande du moteur, dans une partie matérielle primaire ou une partie matérielle secondaire redondante.

12. Entraînement selon l'une des revendications 1 à 11, **caractérisé en ce que** la fonction de marche de secours, plus particulièrement les algorithmes de la fonction de marche d'urgence, est enregistrée intégralement ou au moins partiellement en tant que logiciel dans le convertisseur (5) ou, en variante, un appareil de commande de moteur.

13. Entraînement selon l'une des revendications 9 à 12, **caractérisé en ce que**, dans le logiciel de la fonction de marche de secours, est enregistrée une limitation de puissance afin d'éviter un endommagement supplémentaire du système d'entraînement.
